# EUROPEAN PATENT APPLICATION

(11) **EP 1 726 269 A1**
(43) Date of publication of application: **29.11.2006**
(21) Application number: 06114365.7
(22) Date of filing: 23.05.2006
(51) Int. Cl.: A61C 1/00, A61C 1/18, A61C 17/20

(54) **A dental unit.**

(30) Priority: 27.05.2005 IT BO20050375
(71) Applicant: CASTELLINI S.p.A., 40013 Castel Maggiore (Bologna) (IT)
(72) Inventor: Castellini, Franco, 40124 Bologna (IT)
(74) Representative: Lanzoni, Luciano

(57) **Abstract**

A dental unit (1) comprises a chair (2), a base (3), positioned next to the chair (2) and mounting main and auxiliary equipment; at least one handpiece tray (4) equipped with a plurality of operative or auxiliary handpieces (5) connectable to supply hoses (6), each having an end fitting (7) for receiving a respective handpiece (5) for supplying motive power and fluids to the handpieces (5) themselves; the dental unit (1) further comprises at least one handpiece (8) fitted with a vibrating tool (9) which can be used for surgical operations on soft and/or bony tissue in the oral cavity or for endodontic surgery and which can be applied to a respective end fitting (7).

## Description

The present invention relates to a dental unit.

At present, a dental unit in its most basic form typically consists of a chair, a column-like base which mounts the main and auxiliary items of dental equipment, a tray for a main set of handpieces and, if necessary, another tray for an accessory set of handpieces.

The dental unit is normally equipped with a plurality of dental handpieces, divided substantially into instruments, for example, the turbine and the micromotor, used for removal of dental material, and instruments, for example, the syringe and the polymerising lamp, used for complementary stages of dental treatment.

These handpieces may be located, according to function, either on the main tray or on the accessory tray.

Over time, this basic structure has been constantly improved in both the internal and external features of the dental unit. Thus, the latest dental units include increasingly complex water and compressed air systems, one or more microprocessor units designed to control the functions of the dental unit, and other technological developments.

These continual improvements, combined with the possibility of using microprocessors, have made it possible to improve the handpieces and other working parts of the dental unit in order to optimise the unit, making it as complete and versatile as possible, and thereby avoiding the need to provide separate handpieces or apparatus (often referred to as "stand alone" apparatus) for special operations on patients.

One "stand alone" apparatus known in prior art consists of a handpiece with a sonic or ultrasonic vibrating tool of the type used for dental cleaning operations but used also, by suitably increasing the vibrating frequency of the operating head or handpiece tool, for surgical operations on the soft tissue and/or for working on bony parts of the oral cavity or even for endodontic surgery.

This type of apparatus basically consists of a self-contained unit comprising:
- a handpiece fitted with a sonic or ultrasonic vibrating tool;
- a main body equipped with a system for powering and controlling the handpiece through a sonic or ultrasonic frequency generator; and
- auxiliary means, for example, for cooling the vibrating tool, for suction and irrigation in order to clean and disinfect the treated area.

As stated above, this type of apparatus has, up to now, been independent of the dental unit. This means that it has to be set up separately and moved close to the dental unit whenever required. Moreover, it encumbers the interior of the surgery and involves additional expenditure.

The Applicant, ever aware of the technical and practical requirements of dental surgeons, aims to further enhance the capabilities of dental units by adding the possibility of applying to one of the traditional end fittings of the dental unit a handpiece with a vibrating tool for surgical operations of the type mentioned above, the handpiece being controlled directly by the control circuitry of the dental unit through suitable adaptations within the operating ranges of the handpiece.

In accordance with the invention, this aim is achieved by a dental unit comprising a chair, a base, positioned next to the chair and mounting main and auxiliary equipment; at least one handpiece tray equipped with a plurality of operative or auxiliary handpieces connectable to supply hoses, each having an end fitting for receiving a respective handpiece and designed to supply motive power and fluids to the handpiece themselves; the dental unit further comprises at least one handpiece fitted with a vibrating tool which can be used for surgical operations on soft and/or bony tissue in the oral cavity or for endodontic surgery and which can be applied to a respective end fitting.

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 is a schematic perspective view of a dental unit according to the present invention;
- Figure 2 is a perspective view of a surgical handpiece applicable to the dental unit of Figure 1;
- Figure 3 is a perspective view, with some parts cut away in order to better illustrate others, of the back end of the surgical handpiece of Figure 2;
- Figure 4 illustrates an end fitting with which the dental unit of Figure 1 is equipped and which is designed to receive the surgical handpiece of Figure 2;
- Figure 5 illustrates a dental unit display unit screen for setting and controlling the handpiece of Figure 2.

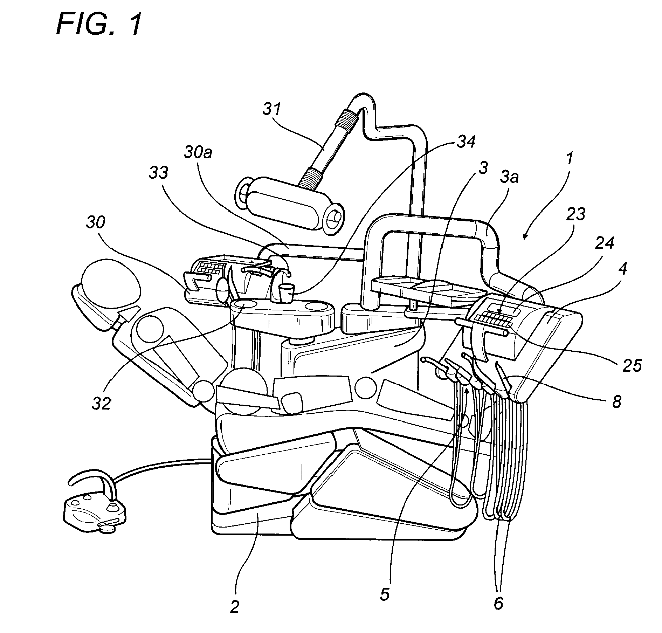

With reference to the accompanying drawings, in particular Figure 1, the dental unit according to the present invention, labelled 1 in its entirety, essentially comprises a chair 2, a column-like base 3, positioned next to the chair 2 and mounting a set of operative and auxiliary elements (which we will describe briefly below) and a main tray 4 for handpieces 5 which, in the embodiment illustrated purely by way of example, is connected to and supported by the base 3 by means of an arm 3a. Obviously, the tray 4 may be mounted on a separate mobile stand independent of the base 3 (as is well known).

Figure 1 also shows a second tray 30 for the dentist's assistant, mounted on a second arm 30a, a lamp 31, a spit bowl 32, a spout 33 for conveying water to a tumbler 34 (forming part of the operative and auxiliary elements), and a pedal unit 35 for activating the handpieces and other functions.

The handpieces 5 are mounted on the two trays 4 and 30 and are divided into operative handpieces and auxiliary handpieces for operations of a different kind such as traditional, conservative operations, implants, and so on.

Each handpiece 5 can be connected to a respective supply hose 6 each having an end fitting 7 for receiving a respective handpiece 5.

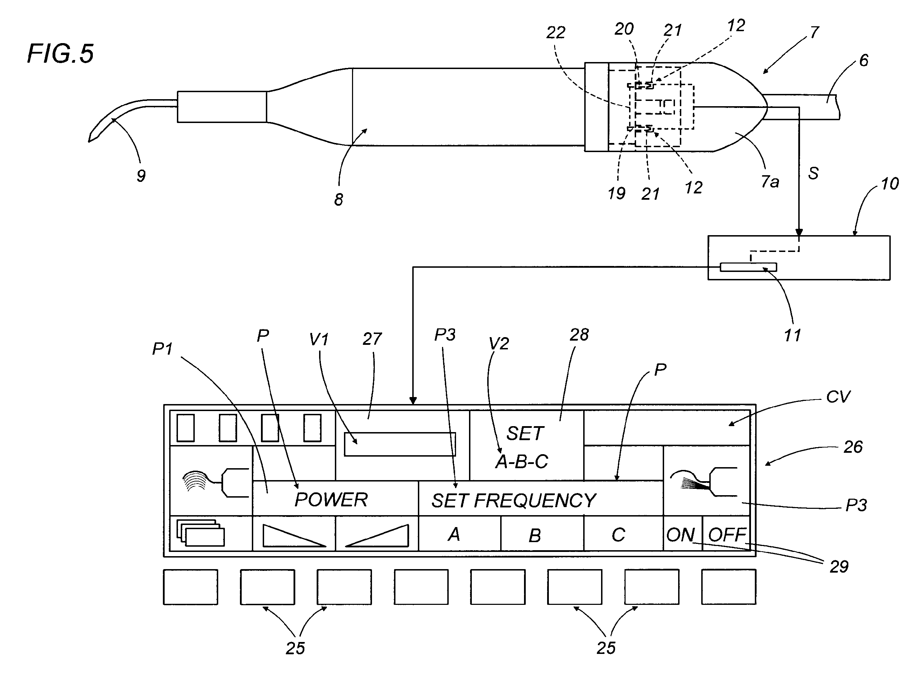

The dental unit 1 may also comprise a microprocessor unit 10 (see Figure 5) for controlling the main and auxiliary functions of the dental unit 1, including the main operative functions of the handpieces, such as, for example, speed, torque limitation, supply of fluids such as air and water, including main supply of fluids for the dental unit, activation of disinfection/sterilisation cycles, etc.

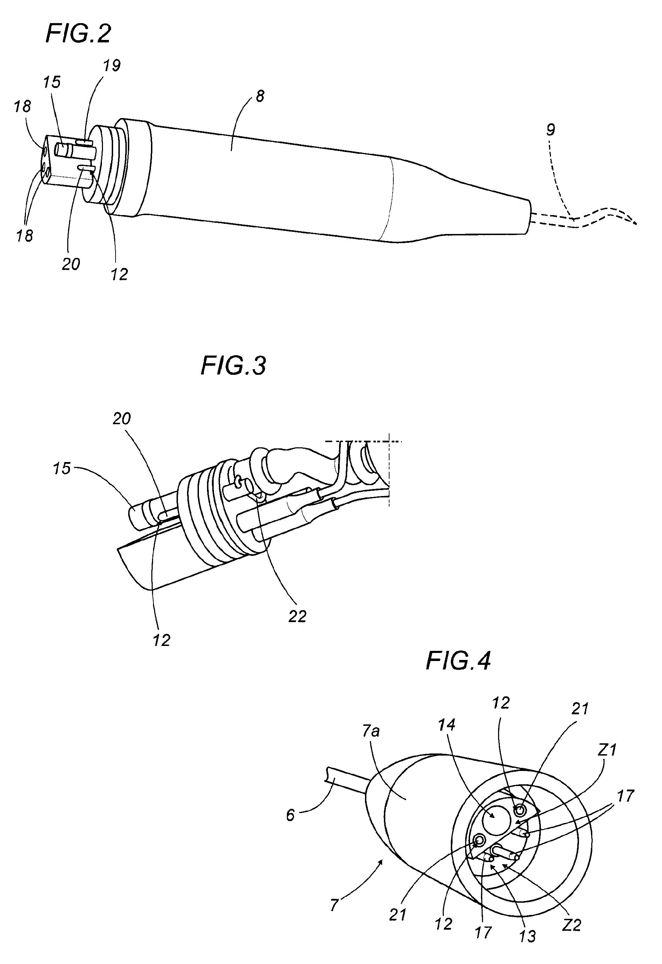

The unit 10 is preferably equipped with a console 23 (located, for example, on the main tray 4) comprising a display unit 24, controlled by the microprocessor unit 10, for the displaying of screens with fields CV corresponding to the above mentioned main and auxiliary functions of the dental unit 1, and with first means 25 for enabling / disabling and varying the functions, said means consisting, for example, of respective pushbuttons. As illustrated in Figures 2 to 5, the dental unit 1 according to the invention comprises at least one handpiece 8 having a vibrating tool 9 for surgical operations on soft and/or bony tissue in the oral cavity - or for endodontic surgery - which can be applied to a respective end fitting 7.

In this specific case, the microprocessor unit 10 has at least one memory bank 11 with a plurality of setting parameters P for controlling the functions of the surgical handpiece 8.

The handpiece 8 also comprises recognition means 12, acting between the end fitting 7 and the surgical handpiece 8, for sending a signal S to the microprocessor unit 10 in such a way as to automatically select the above mentioned plurality of setting parameters P for controlling the main and auxiliary functions for the surgical handpiece 8.

Advantageously, since the dental unit 1 very often already includes a dedicated end fitting 7a adapted to receive a dental tartar remover, for example of piezoelectric type (not illustrated), the surgical handpiece 8 is designed to be applied to the dedicated end fitting 7a for the tartar remover.

Similarly, the above mentioned recognition means 12 act between the dedicated end fitting 7a and the surgical handpiece 8 in order to send the signal S to the microprocessor unit 10 in such a way as to automatically select the setting parameters P for controlling the surgical handpiece 8.

As shown in Figure 4, the dedicated end fitting 7a comprises at least two separate areas Z1 and Z2 within a body 13 to be joined to the end of the tartar remover handpiece opposite the working end and defined by:
- a first quick-release coupling comprising a first socket 14 for receiving in sealed fashion a matching conduit 15 for connecting up to operative and auxiliary fluids (cooling liquid); and
- a second quick-release coupling comprising a plurality of electrical contacts 17 connectable to matching second sockets 18 for supplying power to the handpiece.

At its connecting end, the surgical handpiece 8 in turn comprises:
- the connecting conduit 15 applied to the first socket 14 and through which the operative and auxiliary fluids pass;
- the second sockets 18 for receiving the matching electrical contacts 17; and
- the aforementioned recognition means 12 comprising at least two additional contacts 19 and 20, protruding from the area with the connecting conduit 15 and applied to respective third sockets 21 located in the above mentioned dedicated end fitting 7a and electrically connected to the microprocessor unit 10 in such a way that, when coupled, they send the signal S to the microprocessor unit 10.

The two additional contacts 19 and 20 (see Figures 2 and 3) are located on opposite sides of the conduit 15, with an electrical connecting element 22 extending across the two contacts 19 and 20 themselves.

The element 22 (a cable of electrically conductive material) is connected to the two ends of the contacts that are inside the handpiece 8, so that when the latter is fitted, the circuit that generates the recognition signal S is made by the contacts 19 and 20 and the third sockets 21.

The presence of the surgical handpiece 8 is thus recognised by the microprocessor unit 10 which, when required, activates the setting parameters for controlling the surgical handpiece 8.

On the other hand, when the end fitting 7a is fitted with the handpiece used for tartar removal without the recognition means 12, the unit 10 receives only the standard parameters but no signal to activate surgical parameters.

The above mentioned memory bank 11 of the microprocessor unit 10 may in fact include a series of setting parameters (P1, P2, P3) for the surgical handpiece 8 and consisting at least of the following:
- a value V1 of electrical power supplied to the surgical handpiece 8;
- a first modulating frequency range of values V2 applied to the vibrating tool 9 of the surgical handpiece 8; and
- a data item P3 corresponding to a value for turning on or off a cooling fluid acting on the vibrating tool 9 of the surgical handpiece 8.

When the surgical handpiece 8 is selected, these parameters V1, V2 and P3 appear on the display unit 24 on the console 23 in a screen 26 (see Figure 5) having at least one set of fields 27, 28, 29 defining the setting parameters P1, P2 and P3 for the surgical handpiece 8.

The fields 27, 28 and 29 define the following, respectively:
- the data item corresponding to the value V1 of electrical power supplied to the surgical handpiece 8;
- the data item corresponding to at least a first modulating frequency range of values V2 applied to the vibrating tool 9 of the surgical handpiece 8;
- the data item P3 corresponding to the turning on or off of the supply of a cooling fluid acting on the vibrating tool 9 of the surgical handpiece 8.

Obviously, the screen 26 may include other icons relating to customary functions of the dental unit 1 which are not described.

Figure 5 also shows that there may be different modulating frequency ranges of values V2 (labelled A, B and C) depending on the type of surgery to be carried out with the handpiece 8.

As mentioned above, each field 27, 28 and 29 corresponds to at least one first means 25 or pushbutton for enabling/disabling and varying the data or values displayed in the screen 26: the surgeon can thus adjust, set or disable the functions of the handpiece 8 in accordance with surgical requirements.

The dental unit made in this way therefore fully achieves the aforementioned aims thanks to the possibility of including the surgical handpiece among the normal operating functions of the dental unit, thus enhancing the capabilities of the dental unit.

This enhancement does not involve structural variations in the constructional architecture of the dental unit since the surgical handpiece can be applied to the end fitting used for the customary tartar remover with minor adaptations to the structure of the end fitting.

Thus, an additional handpiece is made available to the dental surgeon without resorting to a stand-alone unit and allowing considerable savings in terms of space and expenditure.

It will be understood that the invention described may be useful in many industrial applications and may be modified and adapted in several ways without thereby departing from the scope of the inventive concept. Moreover, all the details of the invention may be substituted by technically equivalent elements.

## Claims

1. A dental unit (1) of the type comprising a chair (2), a base (3), positioned next to the chair (2) and mounting main and auxiliary equipment; at least one handpiece tray (4) equipped with a plurality of operative or auxiliary handpieces (5) connectable to supply hoses (6), each having an end fitting (7) for receiving a respective handpiece (5) for supplying motive power and fluids to the handpieces (5) themselves; the dental unit being **characterised in that** it further comprises at least one handpiece (8) fitted with a vibrating tool (9) which can be used for surgical operations on soft and/or bony tissue in the oral cavity or for endodontic surgery and which can be applied to a respective end fitting (7).

2. The dental unit according to claim 1, where the dental unit (1) is fitted with a microprocessor unit (10) for controlling the main and auxiliary functions of the dental unit (1), **characterised in that** the microprocessor unit (10) has at least one memory bank (11) with a plurality of parameters (P) for controlling the functions of the surgical handpiece (8).

3. The dental unit according to claims 1 and 2,
**characterised in that** it comprises recognition means (12) acting between the end fitting (7) and the surgical handpiece (8) in order to send a signal (S) to the microprocessor unit (10) in such a way as to automatically select the plurality of setting parameters (P) for controlling the main and auxiliary functions of the surgical handpiece (8).

4. The dental unit according to claims 1 to 3, where one of the end fittings (7a) is dedicated to a dental tartar remover, **characterised in that** the surgical handpiece (8) can be applied to the dedicated end fitting (7a), the recognition means (12) acting between said dedicated end fitting and the surgical handpiece (8) in order to send the signal (S) to the microprocessor unit (10) in such a way as to automatically select the plurality of setting parameters (P) for controlling the surgical handpiece (8).

5. The dental unit according to claim 4, where the dedicated end fitting (7a) comprises at least two separate areas (Z1, Z2) within a body (13) to be joined to the end of the tartar remover handpiece opposite the working end and defined by:
- a first quick-release coupling comprising a first socket (14) for receiving in sealed fashion a matching conduit (15) for connecting up to a supply of operative and auxiliary fluids; and
- a second quick-release coupling comprising a plurality of electrical contacts (17) connectable to matching second sockets (18), located at the end of the tartar remover, for supplying power to the tartar remover, the dental unit being **characterised in that** the surgical handpiece (8) comprises the following at its connecting end:
- the connecting conduit (15) applied to the first socket (14) and through which the operative and auxiliary fluids pass;
- the second sockets (18) for receiving the matching electrical contacts (17); and
- the recognition means (12) comprising at least two additional contacts (19, 20), protruding from the area with the connecting conduit (15) and applied to respective third sockets (21) located in the dedicated end fitting (7a) and electrically connected to the microprocessor unit (10) in such a way that, when coupled, they send the signal (S) to the microprocessor unit (10).

6. The dental unit according to claim 5, **characterised in that** the two additional contacts (19, 20) are located on opposite sides of the conduit (15).

7. The dental unit according to claim 5, **characterised in that** the two additional contacts (19, 20) are located on opposite sides of the conduit (15) and are equipped with an electrical connecting element (22) which extends across the two contacts (19, 20) themselves, is connected to the two ends of the contacts that are inside the handpiece (8), so that when the latter is fitted, the element (22) makes, with the contacts (19, 20) and the third sockets (21), the circuit that generates the recognition signal (S).

8. The dental unit according to claim 2, **characterised in that** the microprocessor unit (10) has at least one parameter (P1) used for setting the surgical handpiece (8) and defined by a value (V1) of electrical power supplied to the surgical handpiece (8).

9. The dental unit according to claim 2, **characterised in that** the microprocessor unit (10) has at least one parameter (P2) used for setting the surgical handpiece (8) and defined by at least one first modulating frequency range of values (V2) applied to the vibrating tool (9) of the surgical handpiece (8).

10. The dental unit according to claim 2, **characterised in that** the microprocessor unit (10) has at least one parameter (P3) used for setting the surgical handpiece (8) and defined by the turning on or off of a supply of cooling fluid acting on the vibrating tool (9) of the surgical handpiece (8).

11. The dental unit according to claim 2, **characterised in that** the memory bank (11) of the microprocessor unit (10) has a series of parameters (P1, P2, P3) used for setting the surgical handpiece (8) and defined at least by the following:
- a value (V1) of electrical power supplied to the surgical handpiece (8);
- a first modulating frequency range of values (V2) applied to a vibrating tool (9) of the surgical handpiece (8); and
- a data item (P3) corresponding to a value for turning on or off a cooling fluid acting on the vibrating tool (9) of the surgical handpiece (8).

12. The dental unit according to any of the foregoing claims from 1 to 7, where the dental unit (1) is equipped with a console (23) comprising a display unit (24), controlled by the microprocessor unit (10), for the displaying of screens with fields (CV) corresponding to the main and auxiliary functions of the dental unit (1), and with first means (25) for enabling / disabling and varying the functions, the dental unit being **characterised in that**, when the surgical handpiece (8) is selected, the display unit (24) displays a screen (26) with at least one field (27) defining a data item corresponding to value (V1) of electrical power supplied to the surgical handpiece (8).

13. The dental unit according to claim 12,
**characterised in that**, when the surgical handpiece (8) is selected, the display unit (24) displays a screen (26) with at least two fields (27, 28) defining, respectively, a data item corresponding to a value (V1) of electrical power supplied to the surgical handpiece (8), and a data item corresponding to at least a first modulating frequency range of values (V2) applied to a vibrating tool (9) of the surgical handpiece (8).

14. The dental unit according to claim 12,
**characterised in that** when the surgical handpiece (8) is selected, the display unit (24) displays a screen (26) with at least three fields (27, 28, 29) defining, respectively:
- a data item corresponding to a value (V1) of electrical power supplied to the surgical handpiece (8) ;
- a data item corresponding to at least a first modulating frequency range of values (V2) applied to a vibrating tool (9) of the surgical handpiece (8) ;
- a data item corresponding to a value (V3) for turning on or off the supply of a cooling fluid acting on the vibrating tool (9) of the surgical handpiece (8).

15. The dental unit according to any of the foregoing claims from 12 to 14, **characterised in that** each field (27, 28, 29) corresponds to a first means (25) for enabling/disabling and varying the data displayed in the screen (26).
